Europäisches Patentamt

European Patent Office

Office européen des brevets

(11) Veröffentlichungsnummer : **0 059 260**
**B1**

(12) **EUROPÄISCHE PATENTSCHRIFT**

(45) Veröffentlichungstag der Patentschrift :
05.06.85

(51) Int. Cl.⁴ : **G 02 B    5/08**

(21) Anmeldenummer : 81109426.7

(22) Anmeldetag : 30.10.81

(54) Laserspiegel, insbesondere Laser-Polygonspiegel.

(30) Priorität : 27.02.81 DE 3107612

(43) Veröffentlichungstag der Anmeldung :
08.09.82 Patentblatt 82/36

(45) Bekanntmachung des Hinweises auf die Patenterteilung : 05.06.85 Patentblatt 85/23

(84) Benannte Vertragsstaaten :
AT BE CH DE FR GB IT LI NL SE

(56) Entgegenhaltungen :
DE-B-    5 391
DE-C-  930 428
GB-A- 1 507 532

(73) Patentinhaber : Siemens Aktiengesellschaft
Berlin und München Wittelsbacherplatz 2
D-8000 München 2 (DE)

(72) Erfinder : Grewal, Virinder, Dr.-Ing.
Karwendelstrasse 45
D-8017 Ebersberg (DE)
Erfinder : Reindl, Werner
Kirchfeldstrasse 6
D-8025 Unterhaching (DE)

EP 0 059 260 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft einen haftfesten hochreflektierenden und korrosionsfesten Schichtaufbau für Laserspiegel, insbesondere Laser-Polygonspiegel, mit einer poliergefrästen Metalloberfläche, einer auf der Metalloberfläche aufgebrachten Haftschicht und einer auf der Haftschicht angebrachten, mit einer Schutzschicht versehenen Reflexionsschicht.

Polygonspiegel aus Aluminium- oder Messinglegierungen werden z. B. für Laser-Flachbettaufzeichnungsgeräte verwendet. Durch spanabhebende Polierfräsen werden glatte Spiegelflächen mit geringer Rauhigkeit hergestellt. Diese Metall-Spiegelflächen sind bei Klima- und Temperaturlagerung nicht ausreichend korrosionsbeständig und verringern dadurch den Reflexionsgrad.

Poliergefräste Metalloberflächen werden nach bislang bekannten Verfahren mit einer Haftschicht aus Siliziumoxid bzw. Aluminiumoxid und anschließend mit Aluminium und einer Quarzschicht bedampft. Die Haftfestigkeit dieses Schichtaufbaus ist nicht ausreichend. Durch Korrosion (Klima- und Temperatureinflüsse) wird der Reflexionsgrad vermindert.

Eine metallische Haftschicht kann die Haftfestigkeit des Schichtaufbaus verbessern. Die Korrosionsbeständigkeit ist jedoch dadurch auch für Laserspiegel nicht ausreichend. Untersuchungen haben gezeigt, daß sich bei Temperaturlagerung die grobe Kristallstruktur des poliergefrästen Metallkörpers in der Reflexionsschicht abbildet, wodurch diese rauh wird und die Reflexion verschlechtert. Auch der Schichtaufbau Chrom/Siliziumoxid/Aluminium oder Silber/Siliziumoxid, wie aus der DE-C-930 428 bekannt, hat Nachteile. Nach dieser Patentschrift hergestellte Spiegel eignen sich beispielsweise für lichtstarke Scheinwerfer, die für militärische Zwecke Verwendung finden. Sie genügen allerdings nicht den hohen Beanspruchungen, die an Laserspiegel gestellt werden. In der genannten Patentschrift sind auch keine Schichtdicken angegeben.

Zur Umwandlung der Silizium-Sauerstoffschicht in Siliziumdioxid ist beim genannten Stand der Technik eine zusätzliche oxidierende Behandlung (vorzugsweise elektrolytische Oxidation) notwendig. Eine solche Nachbehandlung ist nach uns bekannten Verfahren nicht möglich. Eine thermische Nachbehandlung zur Umwandlung von SiO in SiO$_2$ hätte zur Folge, daß SiO durch die Reflexionsschicht (Al) reduziert wird. Dadurch entsteht eine rauhe Oberfläche, die zu einer Herabsetzung der Reflexionseigenschaften führt.

Auch nach dem in « Applied Optics », Vol. 14, No. 11, Seiten 2639 bis 2644, beschriebenen Verfahren ist die Haftung der Spiegelschichten auf Metalloberflächen nicht ausreichend.

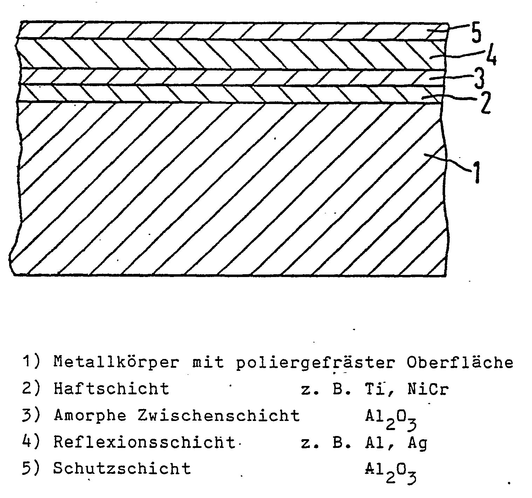

Der Erfindung liegt daher die Aufgabe zugrunde, einen haftfesten korrosionsbeständigen Laserspiegel zu schaffen, der auch auf längere Zeit gesehen hervorragende und unverändert gute Reflexionseigenschaften aufweist. Durch die Erfindung soll demnach die Lebensdauer verlängert und die Abbildung der Kristallstruktur des Metallkörpers in der Reflexionsschicht vermieden werden.

Diese Aufgabe wird dadurch gelöst, daß die Zwischenschicht aus amorphem Aluminiumoxid mit einer Schichtdicke von 50 bis 500 nm, die Schutzschicht aus Aluminiumoxid mit 30 bis 300 nm Dicke, die Haftschicht aus Titan oder Chrom mit 10 bis 200 nm Dicke ausgeführt sind und die Dicke der Reflexionsschicht 100 bis 1 000 nm beträgt. Aluminiumoxid-Schichten haben gegenüber Siliziumdioxid-Schichten den Vorteil, daß sie härter und kratzfester sind.

Vorteilhafte Weiterbildungen der Erfindung sind in den Unteransprüchen 2 und 3 angegeben.

Bei dem erfindungsgemäßen Spiegel hat es sich als vorteilhaft gegenüber bekannten Spiegeln gezeigt, daß durch die amorphe Zwischenschicht aus Aluminiumoxid verhindert wird, daß im Laufe der Zeit die kristalline Struktur des Metallkörpers sich auf der Reflexionsschicht abbildet (Epitaxieeffekt) und es zu einer rauhen Spiegeloberfläche kommt, durch die das Reflexionsvermögen wesentlich verschlechtert wird.

Die amorphe Zwischenschicht aus Aluminiumoxid verhindert, daß die Bestandteile des Metallkörpers bis in die Reflexionsschicht eindiffundieren und sich Lokalelemente bilden, die zu verstärkter Korrosion führen.

Ein weiterer Vorteil der Erfindung besteht darin, daß alle Schichten in einem Vakuumprozeß hergestellt werden können und keiner zusätzlichen Nachbehandlung bedürfen.

Auch ist es möglich, bei der Herstellung des Spiegels, das Material der Reflexionsschicht mit feinerer Kristallstruktur aufzubringen, als ohne diese amorphe Zwischenschicht, was sich ebenfalls als vorteilhaft auf das Reflexionsverhalten des Spiegels auswirkt. Insgesamt wird somit das Langzeitverhalten der Reflexionsschicht des Spiegels verbessert und in Verbindung mit der Haftschicht und der Schutzschicht insgesamt das Korrosionsverhalten verbessert.

An dem Erfindungsgegenstand wurden Langzeituntersuchungen bei Klimalagerung (rel. Luftfeuchte 90 % und Temperatur 40 °C) und Temperaturlagerung (100 °C) durchgeführt und mit Hilfe von Reflexionsmessungen quantitativ ausgewertet. Diese Untersuchungen haben ergeben, daß beim Spiegel nach der Erfindung keine Korrosion auftritt und dadurch der Reflexionsgrad erhalten bleibt.

## Patentansprüche

1. Laserspiegel mit einer Metallunterlage mit darauf aufgetragenem vierschichtigem Aufbau (2, 3, 4, 5), der aus nacheinander angeordneten Schichten, und zwar einer Metallhaft-, einer Zwischen-, einer Metallreflexions- und einer Schutzschicht besteht, dadurch gekennzeichnet, daß die Zwischenschicht (3) aus amorphem Aluminiumoxid mit einer Schichtdicke von 50 bis 500 nm, die Schutzschicht (5) aus Aluminiumoxid mit 30 bis 300 nm Dicke, die Haftschicht (2) aus Titan oder Chrom mit 10 bis 200 nm Dicke ausgeführt sind und die Dicke der Reflexionsschicht (4) 100 bis 1 000 nm beträgt.

2. Laserspiegel nach Anspruch 1, dadurch gekennzeichnet, daß der Schichtaufbau, bestehend aus Haftschicht (2), amorpher Zwischenschicht (3), Reflexionsschicht (4) und Schutzschicht (5) durch Aufdampfen bzw. Aufstäuben in einem Vakuumprozeß hergestellt ist.

3. Laserspiegel nach Anspruch 1 oder 2, dadurch gekennzeichnet, daß die Reflexionsschicht (4) aus Aluminium oder Silber besteht.

## Claims

1. A laser mirror having a metal support with a fourlayer structure (2, 3, 4, 5) arranged thereon and consisting of consecutively arranged layers, namely an adhesive metal layer, an intermediate layer, a reflecting metal layer and a protective layer, characterised in that the intermediate layer (3) is made of amorphous aluminium oxide with a thickness of 50 to 500 nm, the protective layer (5) of aluminium oxide with a thickness of 30 to 300 nm, the adhesive layer (2) of titanium or chromium with a thickness of 10 to 200 nm, and the thickness of the reflecting layer (4) is 100 to 1,000 nm.

2. A laser mirror as claimed in Claim 1, characterised in that the layer structure consisting of the adhesive layer (2), amorphous intermediate layer (3), reflecting layer (4) and protective layer (5) is produced by vapour deposition or sputtering in a vacuum process.

3. A laser mirror as claimed in Claim 1 or Claim 2, characterised in that the reflecting layer (4) consists of aluminium or silver.

## Revendications

1. Miroir de laser comprenant un substrat métallique sur lequel est déposée une structure à quatre couches (2, 3, 4, 5), qui est constituée de couches successives et, en fait, d'une couche métallique d'adhérence, d'une couche intermédiaire, d'une couche métallique réfléchissante et d'une couche de protection, caractérisé en ce que la couche intermédiaire (3) est en oxyde d'aluminium amorphe, avec une épaisseur de couche de 50 à 500 nm, la couche de protection (5) est en oxyde d'aluminium avec une épaisseur de 40 à 300 nm, la couche d'adhérence (2) est en titane ou en chrome avec une épaisseur de 10 à 200 nm et l'épaisseur de la couche réfléchissante (4) est comprise entre 100 et 1 000 nm.

2. Miroir de laser suivant la revendication 1, caractérisé en ce que la structure en couches constituée de la couche d'adhérence (2), de la couche intermédiaire (3) amorphe, de la couche réfléchissante (4) et de la couche de protection (5) est fabriquée par dépôt en phase vapeur ou par saupoudrage dans un processus sous vide.

3. Miroir de laser suivant la revendication 1 ou 2, caractérisé en ce que la couche réfléchissante (4) est en aluminium ou en argent.

1) Metallkörper mit poliergefräster Oberfläche

2) Haftschicht               z. B. Ti, NiCr

3) Amorphe Zwischenschicht     $Al_2O_3$

4) Reflexionsschicht      z. B. Al, Ag

5) Schutzschicht             $Al_2O_3$